(19) Europäisches Patentamt
European Patent Office
Office européen des brevets

(11) **EP 4 432 681 A1**

(12) **EUROPEAN PATENT APPLICATION**
published in accordance with Art. 153(4) EPC

(43) Date of publication:
**18.09.2024 Bulletin 2024/38**

(21) Application number: **22892901.4**

(22) Date of filing: **11.11.2022**

(51) International Patent Classification (IPC):
**H04N 23/52** (2023.01)  **G01S 7/497** (2006.01)
**G06T 7/00** (2017.01)  **H04N 23/60** (2023.01)

(52) Cooperative Patent Classification (CPC):
**G01S 7/497; G06T 7/00; H04N 23/52; H04N 23/60**

(86) International application number:
**PCT/JP2022/042113**

(87) International publication number:
**WO 2023/085403 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.11.2021 JP 2021185116**

(71) Applicant: **Koito Manufacturing Co., Ltd.
Tokyo 108-8711 (JP)**

(72) Inventors:
• **TOKIDA, Masanori
Shizuoka 4248764 (JP)**
• **MORISHITA, Sakaki
Tokyo 1530061 (JP)**

(74) Representative: **Hoffmann Eitle
Patent- und Rechtsanwälte PartmbB
Arabellastraße 30
81925 München (DE)**

(54) **SENSING SYSTEM**

(57) A sensing system 400 includes an image sensor 420 and an arithmetic processing device 440. The arithmetic processing device 440 processes image data IMG generate by the image sensor 420. When the arithmetic processing device 440 detects a decrease in contrast in the same determination region of two consecutive frames of an image, the arithmetic processing device determines that a water droplet has adhered.

FIG.1

## Description

TECHNICAL FIELD

The present disclosure relates to a sensing system for an automobile.

BACKGROUND ART

An object identification system that senses a position and a type of an object around a vehicle is used for automatic driving or automatic control of a light distribution of a headlamp. The object identification system includes a sensor and an arithmetic processing device that analyzes an output of the sensor. The sensor is selected from a camera, a light detection and ranging or laser imaging detection and ranging (LiDAR), a millimeter-wave radar, an ultrasonic sonar, and the like, considering use, required accuracy, and cost.

Optical sensors (hereinafter, simply referred to as sensors) are largely divided into passive sensors and active sensors. The passive sensor detects light emitted by an object or light reflected by an object from environmental light, and the sensor itself does not emit light. On the other hand, the active sensor irradiates an object with illumination light and detects reflected light thereof. The active sensor mainly includes a light projector (illuminator) that irradiates an object with light and a light sensor that detects reflected light from the object. The active sensor has an advantage of being able to increase resistance to disturbances over the passive sensor by matching a wavelength of the illumination light and a sensitivity wavelength range of the sensor.

SUMMARY OF INVENTION

TECHNICAL PROBLEM

When water droplets adhere to a cover glass surface of an image sensor, detection accuracy deteriorates. For this reason, in a sensing system that needs to secure detection accuracy even in bad weather, measures such as adding a water droplet removal mechanism such as a wiper are required. In this case, it is necessary to detect adhesion of water droplets in order to properly give a trigger for activating a raindrop removal operation to the water droplet removal mechanism.

A raindrop sensor is known as a technology for detecting water droplets, but adding a raindrop sensor to the sensing system increases cost. In addition, the raindrop sensor cannot be attached on an optical axis of the image sensor because it interferes with sensing.

Further, even when no water droplet removal mechanism is provided, detection of water droplets is desirable from a standpoint of functional safety because it allows prediction of a deterioration in the accuracy of the sensing system.

The present disclosure has been made in view of such problems, and one of the exemplary purposes thereof is to provide a sensing system that can detect raindrops by image processing.

SOLUTION TO PROBLEM

A sensing system of one aspect of the present disclosure includes an image sensor and an arithmetic processing device configured to process an image generated by the image sensor. The arithmetic processing device is configured to determine presence or absence of a water droplet based on a change in the same determination region of two consecutive frames of the image.

Note that optional combinations of the constituent elements described above and mutual substitutions of constituent elements or expressions among methods, apparatuses, systems, or the like are also valid as aspects of the present invention or present disclosure. Furthermore, the description of this item (SUMMARY OF INVENTION) does not describe all the indispensable features of the present invention, and therefore, the subcombinations of these features described can also be the present invention.

ADVANTAGEOUS EFFECTS OF INVENTION

According to one aspect of the present disclosure, it is possible to detect a water droplet.

BRIEF DESCRIPTION OF DRAWINGS

FIG. 1 is a block diagram of a sensing system according to an embodiment.
FIG. 2 is a view illustrating an effect of a water droplet on image data.
FIGS. 3A and 3B are views illustrating detection of a water droplet by the sensing system of FIG. 1.
FIGS. 4A and 4B are views showing an example of a determination region A.
FIG. 5 is a view showing another example of the determination region A.
FIG. 6 is a block diagram of a sensing system.
FIG. 7 is a view illustrating an operation of the ToF camera.
FIGS. 8A and 8B are views illustrating images obtained by the ToF camera.
FIG. 9 is a view illustrating detection of a water droplet based on range images.
FIG. 10 is a view showing a sensing system provided with a water droplet removal device.
FIG. 11 is a view showing a vehicle lamp with a built-in sensing system.
FIG. 12 is a block diagram showing a vehicle lamp including a sensing system.

DESCRIPTION OF EMBODIMENTS

<Outline of Embodiments>

An outline of several exemplary embodiments of the present disclosure will be described. The outline is a simplified explanation regarding several concepts of one or multiple embodiments as an introduction to the detailed description described below in order to provide a basic understanding of the embodiments, and is by no means intended to limit the scope of the present invention or disclosure. Furthermore, the outline is by no means a comprehensive outline of all conceivable embodiments, and does not limit the essential components of the embodiments. For convenience, in some cases, "one embodiment" as used herein refers to a single embodiment (embodiment or modified variation) or a plurality of embodiments (embodiments or variations) disclosed in the present specification.

A sensing system according to one embodiment includes an image sensor and an arithmetic processing device configured to process an image generated by the image sensor. The arithmetic processing device is configured to determine presence or absence of a water droplet based on a change in the same determination region of two consecutive frames of the image.

The present inventor has recognized that when water droplets adhere to a cover glass on an optical axis of an image sensor (on a field of view), the contrast of an image decreases due to scattering by the water droplets. When comparing two temporally adjacent frames, it is rare for positions of the same object appearing in an image to be significantly different, and it is rare for the brightness of the object to be significantly different. Therefore, when the same determination region in two frames is compared, the contrast is likely to be substantially the same. In other words, if a significant decrease in contrast is detected in the same determination region, it can be assumed that the decrease is due to the adhesion of water droplets. As such, according to the above configuration, the adhesion of water droplets can be determined by image processing.

To determine whether the "contrast has decreased," a determination value serving as an index of contrast may be generated for the determination region of each frame and the determination may be made based on a relative relationship or absolute relationship between the two determination values.

In one embodiment, the determination region may be set at a predetermined position. The predetermined position may be set as a range where the same object is always captured, or where nothing is captured. Such a location can be said to be suitable for the determination region because it can be said that there are few factors that cause a change in the contrast other than the adhesion of water droplets. For example, an upper part of an image corresponds to a blank space (sky), and a lower part of the image corresponds to a road surface.

By setting a region where the same subject is always captured as the determination region, it becomes easy to detect the contrast caused by the adhesion of water droplets.

In one embodiment, the arithmetic processing device may be configured to divide each of the two consecutive frames into a plurality of determination regions and to determine adhesion of a water droplet for each determination region.

In one embodiment, the arithmetic processing device may be configured to detect an object included in an image and to set the determination region so that the object which is detected is included. This allows a water droplet to be detected for a range where an object of interest, such as a person and a vehicle, is captured. In addition, since the change in contrast due to the presence or absence of a water droplet is greater in a part where a person, a vehicle, or the like captured, the effect of increasing the detection accuracy of water droplet can be expected.

In one embodiment, the arithmetic processing device may be configured to generate two histograms for the determination regions of the two frames. By generating the histograms, the change in contrast can be detected.

In one embodiment, the arithmetic processing device may determine that a water droplet has adhered when a frequency of a predetermined section on a low-brightness side of a histogram of a frame decreases from a frequency of the same section of a histogram of a previous frame. When a water droplet adheres, a pixel value of a part where no object is present increases due to scattered light caused by the water droplet. Therefore, the water droplet can be detected based on the frequency of the section on the low-brightness side.

In one embodiment, the arithmetic processing device may determine that a water droplet has adhered when a median value of a predetermined section of a histogram of a frame increases more than a median value of a predetermined section of a histogram of a previous frame. When a water droplet adheres, a pixel value of a part where no object is present increases due to scattered light caused by the water droplet, whereby the median value is shifted to the high-brightness side. For this reason, the water droplet can be detected based on the change in the median value of the histogram.

In one embodiment, the arithmetic processing device may determine that a water droplet has adhered when a spatial frequency of a determination region of a frame decreases from a spatial frequency of a determination region of a previous frame. When scattering occurs due to a water droplet, an outline of an image of an object becomes blurred and the contrast decreases. The blurring of the outline appears as a result of a decrease in spatial frequency. Therefore, by monitoring the spatial frequency, the adhesion of water droplet can be detected.

In one embodiment, an illumination device configured to irradiate a field of view with illumination light may be additionally provided. The sensing system may be a time of flight (ToF) camera configured to divide a field of view into a plurality of ranges with respect to a depth direction and to change a time difference between light emission and imaging for each range, making it possible to obtain a plurality of range images corresponding to the plurality of ranges.

In one embodiment, the arithmetic processing device may be configured to compare a determination region of each of the plurality of range images of a frame with a determination region of each of the plurality of range images of a subsequent frame, and determine that a water droplet has adhered when a decrease in contrast is detected in two or more range images. The effect of water droplet appears in the plurality of range images corresponding to the plurality of ranges. Therefore, detection accuracy can be increased by setting detection of a decrease in contrast in two or more range images as a condition for the determination of a water droplet.

Hereinafter, favorable embodiments will be described with reference to the drawings. The same or equivalent components, members and processing shown in each drawing are denoted with the same reference numerals, and repeated descriptions will be omitted appropriately. Furthermore, the embodiments are illustrative, not limiting the disclosure, and all features or combinations thereof described in the embodiments are not necessarily essential to the invention.

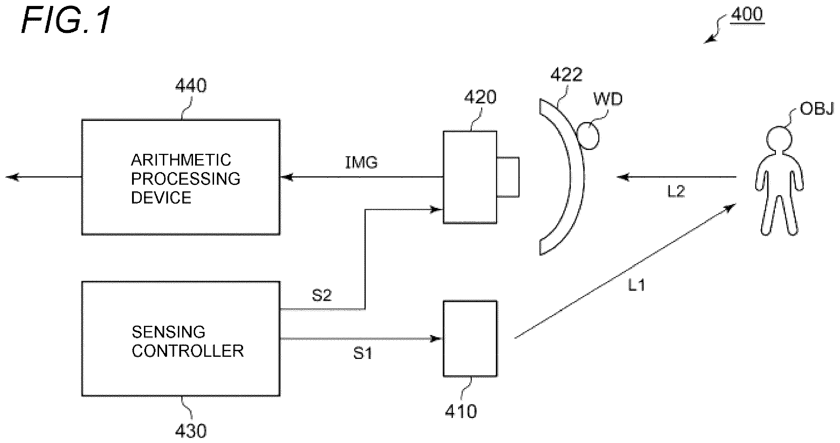

FIG. 1 is a block diagram of a sensing system 400 according to an embodiment. The sensing system 400 includes a visible light camera, an infrared camera, a stereo camera, a ToF camera, a LIDAR, or the like. In the present embodiment, the sensing system 400 is an active sensor, and includes an illumination device 410, an image sensor 420, a sensing controller 430, and an arithmetic processing device 440.

The illumination device 410 includes a semiconductor light-emitting element such as a laser diode or a light-emitting diode (LED), and irradiates a field of view with illumination light L1. A wavelength of the illumination light L1 is not particularly limited, and the illumination light may be infrared light, visible light, or white light.

The image sensor 420 has sensitivity to the same wavelength as the illumination light L1. The light sensor 420 receives reflected light L2 by an object OBJ within a sensing range (field of view) of the sensing system 400 from the illumination light L1 and generates image data IMG.

The sensing controller 430 integrally controls the sensing system 400. Specifically, light emission from the illumination device 110 and sensing by the image sensor 420 are synchronously controlled.

The arithmetic processing device 440 processes the image data IMG generated by the image sensor 420.

A cover glass 422 is provided on an optical axis of the image sensor 420. The cover glass 422 is a member directly exposed to an external environment and may be a part of the image sensor 420 or a separate member independent from the image sensor 420.

The arithmetic processing device 440 has a function of processing the image data IMG to detect a water droplet WD adhering to the cover glass 422.

When the arithmetic processing device 440 detects a decrease in contrast in the same region (referred to as a determination region) of two temporally consecutive frames $F_i$ and $F_{i+1}$ of the image data IMG, the arithmetic processing device determines that the water droplet WD is adhering.

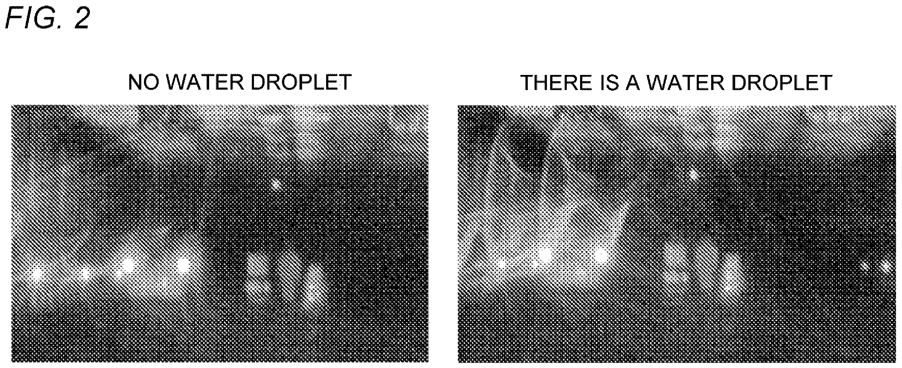

The above is the configuration of the sensing system 400. Subsequently, operations thereof will be described. FIG. 2 is a view illustrating an effect of water droplets on image data. FIG. 2 shows image data of two pieces obtained by capturing the same scene. On the left is image data before a water droplet adheres, and on the right is image data after a water droplet adheres. When a water droplet adheres, reflected light from an object or light emitted by the object is scattered by the water droplet, so the brightness of a part where no object is present becomes brighter. That is, the water droplet lowers the contrast of an image compared to a case where no water droplet is present.

In addition, when a water droplet adheres, an outline of an object becomes faintly visible. That is, when focusing on a narrow region including an object, the water droplet lowers the contrast of an image compared to a case where no water droplet is present.

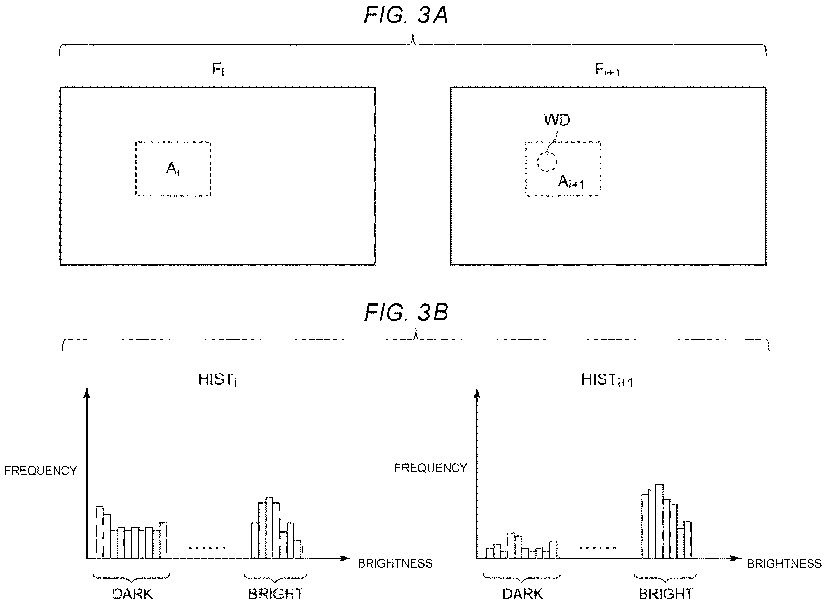

FIGS.3A and 3B are views illustrating detection of a water droplet by the sensing system 400 of FIG. 1. FIG. 3A shows two temporally consecutive frames $F_i$ and $F_{i+1}$. In the respective frames $F_i$ and $F_{i+1}$, determination regions $A_i$ and $A_{i+1}$ of the same size and same position are shown. It is assumed that no water droplet adheres in the determination region $A_i$ of the preceding frame $F_i$ and a water droplet WD adheres in the determination region $A_{i+1}$ of the subsequent frame $F_{i+1}$. Note that since the water drop WD is transparent, the water drop WD is not captured in an image itself.

In FIG. 3B, histograms of the determination regions $A_i$ and $A_{i+1}$ of the two frames $F_i$ and $F_{i+1}$ are shown, respectively.

The arithmetic processing device 440 generates two histograms $HIST_i$, and $HIST_{i+1}$ for the determination regions $A_i$ and $A_{i+1}$ of the two frames $F_i$ and $F_{i+1}$. When light is scattered by a water droplet, light incident on pixels that were originally receiving strong light decreases, and light incident on pixels that were not originally receiving light increases. As a result, the histogram shows a decrease in frequency of a low-gradation section (dark part) DARK with a small brightness value and an increase in frequency of a high-gradation section (bright part) BRIGHT with a large brightness value or an intermediate-gradation section. This results in a transition to a frequency distribution that is flat or is biased toward the high-brightness and a decrease in contrast.

The arithmetic processing device 440 determines the presence or absence of the water droplet WD by detecting a change in the histogram, that is, a decrease in contrast.

For example, the arithmetic processing device 440 may monitor the histogram of the low-gradation section DARK and detect the adhesion of a water droplet based on a change of the histogram.

For example, a plurality of adjacent bins in the low-gradation section DARK, for example, three adjacent bins, are set as a monitoring section, and the adhesion of a water droplet is detected by comparing sums of frequencies in the monitoring sections. For example, when a difference between a sum of frequencies in the monitoring section of the histogram $HIST_{i+1}$ and a sum of frequencies in the monitoring section of the histogram $HIST_i$ exceeds a threshold, it may be determined that a water droplet has adhered.

Alternatively, the arithmetic processing device 440 may detect the adhesion of a water droplet by comparing the median values of the monitoring sections.

The presence or absence of a water droplet may also be determined based on the high-gradation section BRIGHT rather than the low-gradation section DARK. For example, a plurality of adjacent bins in the high-gradation section BRIGHT are set as a monitoring section, and the adhesion of a water droplet is detected by comparing sums of frequencies in the monitoring sections. For example, when a difference between a sum of frequencies in the monitoring section of the histogram $HIST_{i+1}$ and a sum of frequencies in the monitoring section of the histogram $HIST_i$ exceeds a threshold, it may be determined that a water droplet has adhered. Alternatively, the arithmetic processing device 440 may detect the adhesion of a water droplet by comparing the median values in the monitoring sections.

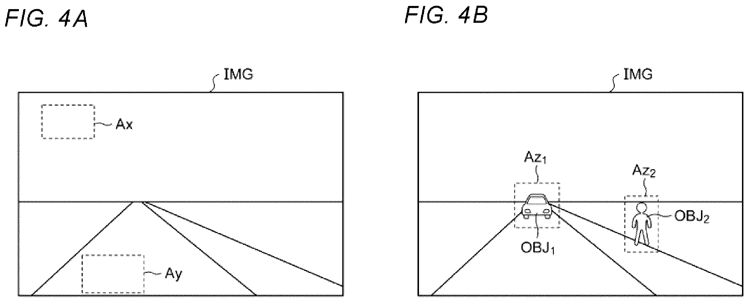

Next, a determination region A will be described. FIGS. 4A and 4B are views showing an example of a determination region A.

As shown in FIG. 4A, the determination region A may be fixed at a predetermined position within a frame. The predetermined position may be set as a range where the same object is always captured, or where nothing is captured. For example, a part Ax on an upper side of an image corresponds to an empty space (sky), so a possibility that a car or a pedestrian will be captured is low. Therefore, it can be said that there are few factors that change the contrast other than the adhesion of a water droplet. Therefore, it can be said that it is suitable for the determination region.

In addition, a part Ay on a lower side of the image corresponds to a road surface, so a possibility that a car or a pedestrian will be captured is low. Therefore, it can be said that there are few factors that change the contrast other than the adhesion of a water droplet. Therefore, it can be said that it is suitable for the determination region.

As such, by setting a range where the same subject is always captured as the determination region, it becomes easy to detect the contrast caused by the adhesion of a water droplet.

Conversely, the determination region A may be changed dynamically. FIG. 4B shows a dynamically changing determination region Az. The arithmetic processing device 440 may detect objects $OBJ_1$ and $OBJ_2$ included in a frame and determine determination region $Az_1$ and $Az_2$ so that the detected objects $OBJ_1$ and $OBJ_2$ are included. This allows a water droplet to be detected for a range where an object of interest, such as a person and a vehicle, is captured. In addition, since the change in contrast due to the presence or absence of a water droplet is greater in a part where a person, a vehicle, or the like captured, the effect of increasing the detection accuracy of water droplet can be expected.

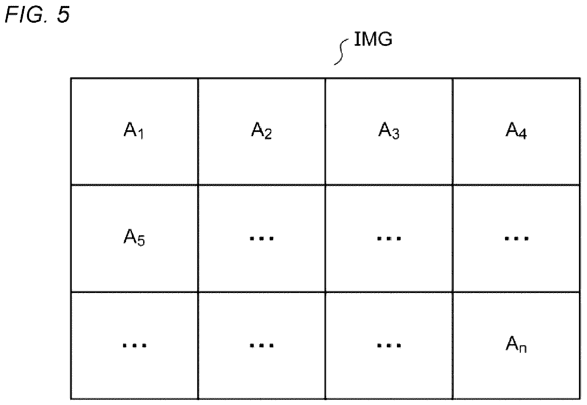

FIG. 5 is a view showing another example of the determination region A. The arithmetic processing device 440 divides the image data IMG (frame) into a plurality of regions, and sets each of the divided regions as determination regions $A_1$ to $A_n$. The arithmetic processing device 440 performs determination for each of the plurality of determination regions $A_1$ to $A_n$. For example, when a decrease in contrast is detected in a plurality of regions exceeding a predetermined number, it may be finally determined that a water droplet is adhering.

A specific example of the sensing system 400 A will be described. One of suitable applications of the sensing system 400 is a ToF camera.

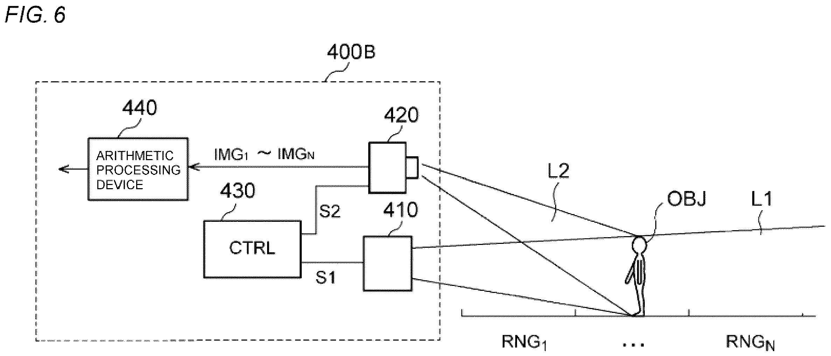

FIG. 6 is a block diagram of a ToF camera 400B. The ToF camera 400B divides a field of view into a plurality of N ranges $RNG_1$ to RNGrr ($N \geq 2$) with respect to a depth direction, and performs imaging.

The ToF camera 400B includes an illumination device 410, an image sensor 420, a camera controller 430, and an arithmetic processing device 440.

The illumination device 410 irradiates the front of the vehicle with pulsed illumination light L1 in synchronization with a light emission timing signal S1 provided from the camera controller 430. The illumination light L1 is preferably infrared light, but is not limited thereto, and may be visible light having a predetermined wavelength.

The image sensor 420 is configured to be able to perform exposure control in synchronization with an imaging timing signal S2 provided from the camera controller 430 and to generate a range image IMG. The image sensor 420 has sensitivity to the same wavelength as the illumination light L1 and captures reflected light (return light) L2 reflected by an object OBJ.

The camera controller 430 maintains predetermined light emission timing and exposure timing for each range RNG. When imaging any range $RNG_i$, the camera controller 430 generates a light emission timing signal S1 and an imaging timing signal S2 on the basis of the light emission timing and exposure timing corresponding to the range and performs the imaging. The ToF camera 400B can generate a plurality of range images $IMG_1$ to $IMG_N$ corresponding to the plurality of ranges $RNG_1$ to $RNG_N$. In an i-th range image $IMG_i$, an object included in the corresponding range $RNG_i$ appears.

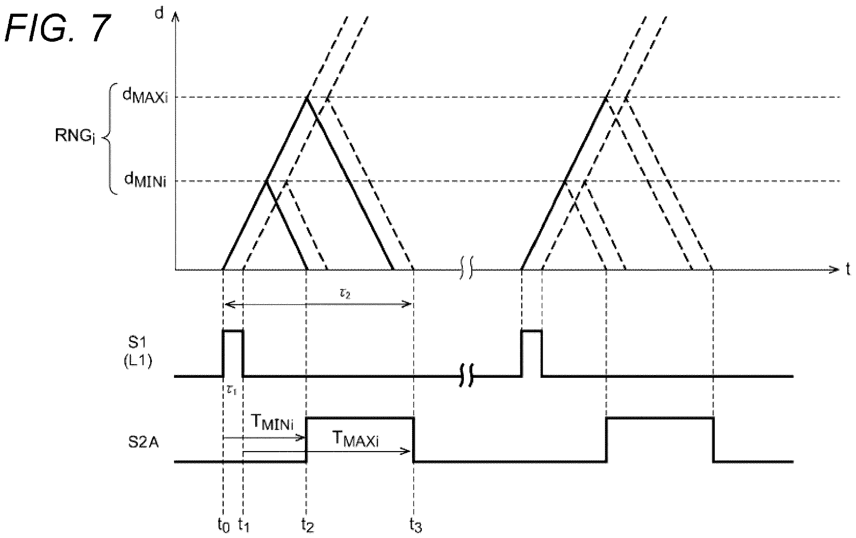

FIG. 7 is a view illustrating an operation of the ToF camera 400B. FIG. 7 shows an aspect when measuring the i-th range $RNG_i$. The illumination device 410 emits light during a light emission period $\tau_1$ between time to and time $t_1$ in synchronization with the light emission timing signal S1. At the top, a diagram of a light beam where a time is indicated on the horizontal axis and a distance is indicated on the vertical axis is shown. A distance from the ToF camera 400B to a front side boundary of the range $RNG_i$ is set to $d_{MINi}$ and a distance from the ToF camera to a deep side boundary of the range $RNG_i$ is set to $d_{MAXi}$.

Round-trip time $T_{MINi}$ from when light emitted from the illumination device 410 at a certain time point reaches the distance $d_{MINi}$ to when reflected light returns to the image sensor 420 is expressed as

$$T_{MINi}=2\times d_{MINi}/c,$$

in which c is the speed of light.

Similarly, round-trip time $T_{MAXi}$ from when light emitted from the illumination device 410 at a certain time point reaches the distance $d_{MAXi}$ to when reflected light returns to the image sensor 420 is expressed as $T_{MAXi}=2\times d_{MAXi}/c$.

When it is desired to image the object OBJ included in the range $RNG_i$, the camera controller 430 generates the imaging timing signal S2 so that the exposure starts at a time $t_2=t_0+T_{MINi}$ and ends at a time $t_3=t_1+T_{MAXi}$. This is one exposure operation.

When imaging the i-th range $RNG_i$, the light emission and the exposure are repeatedly performed multiple times, and measurement results are integrated by the image sensor 420.

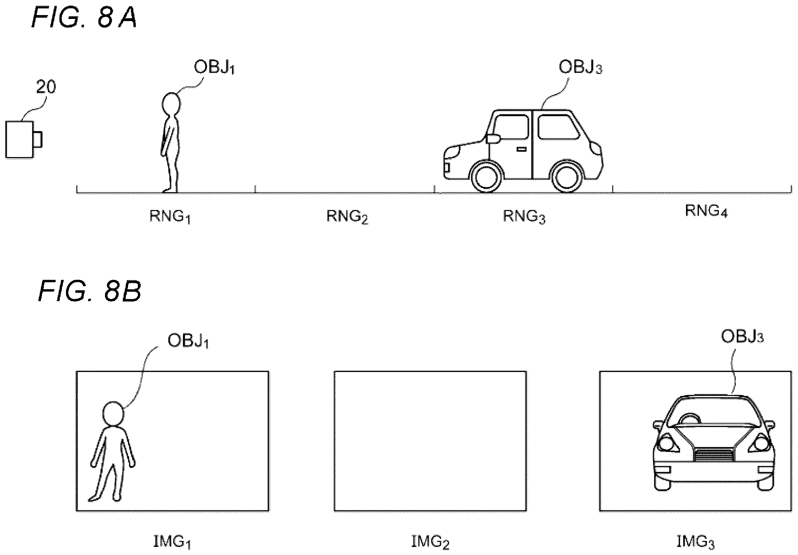

FIGS. 8A and 8B are views illustrating images obtained by the ToF camera 400B. In an example of FIG. 8A, an object (pedestrian) $OBJ_1$ is present in the range $RNG_1$ and an object (vehicle) $OBJ_3$ is present in the range $RNG_3$. FIG. 8B shows a plurality of range images $IMG_1$ to $IMG_3$ obtained in the situation of FIG. 8A. When capturing the range image $IMG_1$, an object image $OBJ_1$ of the pedestrian $OBJ_1$ appears in the range image $IMG_1$ because the image sensor is exposed only to reflected light from the range $RNG_1$.

When capturing the range image $IMG_2$, no object image appears in the range image $IMG_2$ because the image sensor is exposed to reflected light from the range $RNG_2$.

Similarly, when capturing the range image $IMG_3$, only the object image $OBJ_3$ appears in the range image $IMG_3$ because the image sensor is exposed to reflected light from the range $RNG_3$. In this way, an object can be separately captured for each range by the ToF camera 400B.

Returning to FIG. 6, the arithmetic processing device 440 detects adhesion of a water droplet on the basis of the plurality of range images $IMG_1$ to $IMG_N$.

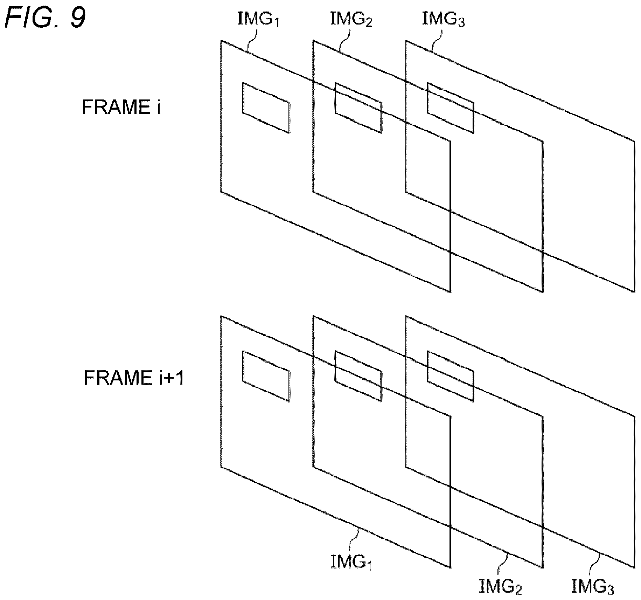

FIG. 9 is a diagram illustrating detection of a water droplet based on range images. The arithmetic processing device 440 compares and refers to the determination regions of each of the plurality of range images $IMG_1$ to $IMG_N$ of a frame and the determination regions of each of the plurality of range images $IMG_1$ to $IMG_N$ of a subsequent frame. When a decrease in contrast in the determination region is detected in two or more of the plurality of range images $IMG_1$ to $IMG_N$, it is determined that a water droplet has adhered.

It is highly likely for the effect of a water droplet to appear in multiple images of the plurality of range images $IMG_1$ to $IMG_N$, not a range image of a specific range. Therefore, detection accuracy can be increased by setting detection of a decrease in contrast in two or more range images as a condition for the determination of a water droplet.

The detection result by the arithmetic processing device 440 can be used as a trigger for starting an operation of a water droplet removal device.

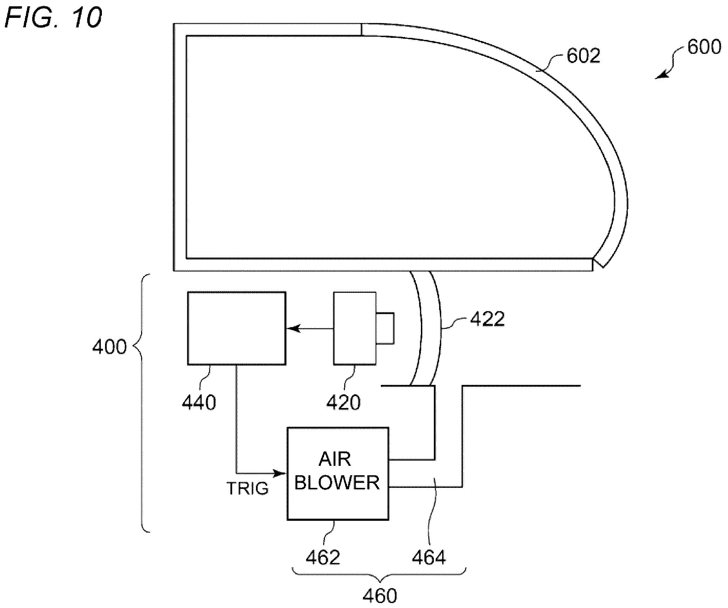

FIG. 10 is a view showing a sensing system provided with a water droplet removal device. The sensing system 400 includes a water droplet removal device 460. The water droplet removal device 460 is a blower type, and removes water droplets by blowing wind onto the cover glass 422. The water droplet removal device 460 includes a blower 462 and a duct 464. Note that the blower 462 may be arranged such that an air flow generated by the blower is directly blown onto the cover glass 422.

When the arithmetic processing device 440 detects a water droplet through image processing, the arithmetic processing device outputs a trigger TRIG to the water droplet removal device 460. In response to the trigger TRIG, the water droplet removal device 460 blows wind onto the cover glass 422. Note that the configuration of the water droplet removal device 460 is not limited to the blower type and may also be other means such as a wiper.

In FIG. 10, the sensing system 400 is attached to a lower side of a main body of a headlamp 600, but the camera of the sensing system 400 may be built in the headlamp 600. In this case, water droplets adhering to the cover glass 602 of the headlamp 600 are subject to detection by the sensing system 400.

(Use)

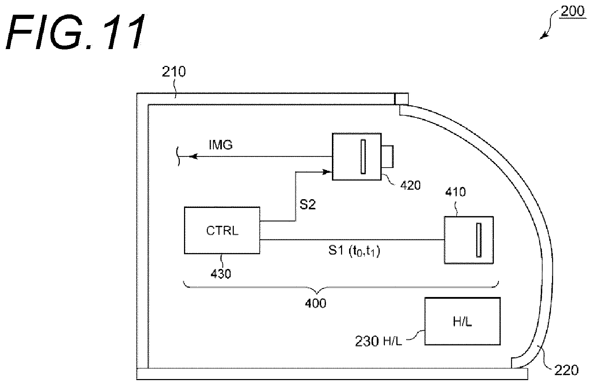

FIG. 11 is a view showing a vehicle lamp 200 with a built-in sensing system 400. The vehicle lamp 200 includes a housing 210, an outer lens 220, lamp units 230H/230L for high beam and low beam, and a sensing system 400. The lamp units 230H/230L and the sensing system 400 are accommodated in the housing 210.

Note that a part of the sensing system 400, for example, the image sensor or the arithmetic processing device 440 may be installed outside the vehicle lamp 200, for example, behind a room mirror.

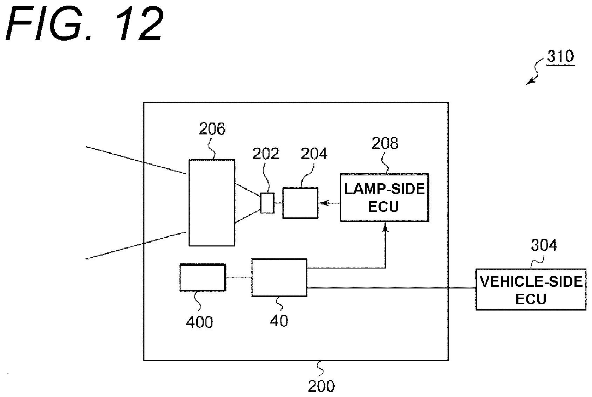

FIG. 12 is a block diagram showing a vehicle lamp 200 including the sensing system 400. The vehicle lamp 200 configures a lamp system 310 together with a vehicle-side ECU 304. The vehicle lamp 200 includes a light source 202, a lighting circuit 204, and an optical system 206.

The arithmetic processing device 40 is configured to be able to identify a type of object based on an image obtained by the sensing system 400.

The arithmetic processing device 40 may be implemented by a combination of a processor (hardware) such as a central processing unit (CPU), a micro processing unit (MPU) and a microcomputer and a software program executed by the processor (hardware). The arithmetic processing device 40 may be a combination of a plurality of processors. Alternatively, the arithmetic processing device 40 may be configured by only hardware.

Information about the object OBJ detected by the arithmetic processing device 40 may be used for light distribution control of the vehicle lamp 200. Specifically, a lamp-side ECU 208 generates a proper light distribution pattern on the basis of information about a type and a position of the object OBJ generated by the arithmetic processing device 40. The lighting circuit 204 and the optical system 206 operate so that the light distribution pattern generated by the lamp-side ECU 208 is obtained.

Furthermore, the information about the object OBJ detected by the arithmetic processing device 40 may be transmitted to the vehicle-side ECU 304. The vehicle-side ECU may perform automatic driving on the basis of the information.

It is understood by one skilled in the art that the above-described embodiments are illustrative and various variations can be made to combinations of each component or each processing process. In the below, such variations will be described.

(Variation 1)

The sensing system 400 is not limited to the ToF camera, and may be a light detection and ranging, laser imaging detection and ranging (LiDAR). Alternatively, the sensing system 400 may be a single pixel imaging device (quantum radar) using correlation calculation.

(Variation 2)

In the embodiment, a decrease in contrast is detected through a change in the histogram, but the means for determining the decrease in contrast is not limited thereto. The arithmetic processing device 440 may determine that a water droplet has adhered when a spatial frequency of a determination region of a frame decreases from a spatial frequency of a determination region of a previous frame.

(Variation 3)

In the embodiment, a part of the image data is set as the determination region, but the entire image data may be set as the determination region.

It should be understood by one skilled in the art that the embodiments are merely illustrative, various variations can be made to combinations of components and processing processes in the embodiments and such variations also fall within the scope of the present invention.

INDUSTRIAL APPLICABILITY

The present disclosure relates to a sensing system for an automobile.

REFERENCE SIGNS LIST

OBJ: object, S1: light emission timing signal, S2: imaging timing signal, 200: vehicle lamp, 202: light source, 204: lighting circuit, 206: optical system, 310: lamp system, 304: vehicle-side ECU, 400: sensing system, 410: illumination device, 420: image sensor, 430: sensing controller, 440: arithmetic processing device, 460: water droplet removal device.

**Claims**

1. A sensing system comprising:

   an image sensor; and
   an arithmetic processing device configured to process an image generated by the image sensor;
   wherein the arithmetic processing device is configured to determine presence or absence of a water droplet based on a change in the same determination region of two consecutive frames of the image.

2. The sensing system according to claim 1, wherein the determination region is set at a predetermined position.

3. The sensing system according to claim 1 or 2, wherein the arithmetic processing device is configured to divide each of the two consecutive frames into a plurality of determination regions and to determine adhesion of a water droplet for each determination region.

4. The sensing system according to claim 1, wherein the arithmetic processing device is configured to detect an object included in the image and to set the determination region so that the object which is detected is included.

5.  The sensing system according to any one of claims 1 to 4, wherein the arithmetic processing device is configured to generate two histograms for the determination regions of the two frames.

6.  The sensing system according to claim 5, wherein the arithmetic processing device determines that a water droplet has adhered when a frequency of a predetermined section on a low-brightness side of a histogram of a frame decreases from a frequency of the same section of a histogram of a previous frame.

7.  The sensing system according to claim 5, wherein the arithmetic processing device determines that a water droplet has adhered when a median value of a predetermined section of a histogram of a frame increases more than a median value of a predetermined section of a histogram of a previous frame.

8.  The sensing system according to any one of claims 1 to 4, wherein the arithmetic processing device determines that a water droplet has adhered when a spatial frequency of a determination region of a frame decreases from a spatial frequency of a determination region of a previous frame.

9.  The sensing system according to any one of claims 1 to 8, further comprising an illumination device configured to irradiate a field of view with illumination light,
    wherein the sensing system is a time of flight (ToF) camera configured to divide a field of view into a plurality of ranges with respect to a depth direction and to change a time difference between light emission and imaging for each range, making it possible to obtain a plurality of range images corresponding to the plurality of ranges.

10. The sensing system according to claim 9, wherein the arithmetic processing device is configured to compare a determination region of each of the plurality of range images of a frame with a determination region of each of the plurality of range images of a subsequent frame, and to determine that a water droplet has adhered when a decrease in contrast is detected in two or more range images.

FIG.1

EP 4 432 681 A1

FIG. 2

## FIG. 3A

$F_i$

$A_i$

$F_{i+1}$

WD

$A_{i+1}$

## FIG. 3B

$HIST_i$

FREQUENCY

BRIGHTNESS

DARK

BRIGHT

$HIST_{i+1}$

FREQUENCY

BRIGHTNESS

DARK

BRIGHT

FIG. 4A

FIG. 4B

EP 4 432 681 A1

*FIG. 5*

IMG

| $A_1$ | $A_2$ | $A_3$ | $A_4$ |
|-------|-------|-------|-------|
| $A_5$ | ... | ... | ... |
| ... | ... | ... | $A_n$ |

FIG. 6

*FIG. 7*

FIG. 8A

20

OBJ₁

OBJ₃

RNG₁    RNG₂    RNG₃    RNG₄

FIG. 8B

OBJ₁

OBJ₃

IMG₁    IMG₂    IMG₃

FIG. 9

FRAME i

IMG₁  IMG₂  IMG₃

FRAME i+1

IMG₁  IMG₂  IMG₃

EP 4 432 681 A1

FIG. 10

EP 4 432 681 A1

# FIG.11

# FIG. 12

310

206

202 204

208

LAMP-SIDE
ECU

304

VEHICLE-SIDE
ECU

400

40

200

<table>
<tr><td colspan="2"><strong>INTERNATIONAL SEARCH REPORT</strong></td><td>International application No.<br><strong>PCT/JP2022/042113</strong></td></tr>
</table>

| | |
|---|---|
| **A.** | **CLASSIFICATION OF SUBJECT MATTER** |

*H04N 23/52*(2023.01)i; *G01S 7/497*(2006.01)i; *G06T 7/00*(2017.01)i; *H04N 23/60*(2023.01)i
FI: H04N5/225 430; G01S7/497; H04N5/232 290; G06T7/00 300E

According to International Patent Classification (IPC) or to both national classification and IPC

| | |
|---|---|
| **B.** | **FIELDS SEARCHED** |

Minimum documentation searched (classification system followed by classification symbols)

H04N5/225; G01S7/497; G06T7/00; H04N5/232

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2018-71994 A (DENSO TEN LTD) 10 May 2018 (2018-05-10) | 1-3, 5 |
| | paragraphs [0012]-[0136], fig. 1-14 | |
| Y | paragraphs [0012]-[0136], fig. 1-14 | 8-9 |
| A | paragraphs [0012]-[0136], fig. 1-14 | 4, 6-7, 10 |
| Y | JP 2007-159021 A (MATSUSHITA ELECTRIC IND CO LTD) 21 June 2007 (2007-06-21) | 8 |
| | paragraphs [0077]-[0091] | |
| Y | JP 2018-32984 A (SONY CORP) 01 March 2018 (2018-03-01) | 9 |
| | paragraphs [0108]-[0111], fig. 10 | |
| A | paragraphs [0108]-[0111], fig. 10 | 4, 10 |
| A | JP 2005-5799 A (MITSUBISHI ELECTRIC CORP) 06 January 2005 (2005-01-06) | 6-7 |
| | entire text, all drawings | |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/042113**

| Patent document cited in search report | | | Publication date (day/month/year) | Patent family member(s) | Publication date (day/month/year) |
|---|---|---|---|---|---|
| JP | 2018-71994 | A | 10 May 2018 | US 2018/0114089 A1 paragraphs [0056]-[0180], fig. 1-14 | |
| JP | 2007-159021 | A | 21 June 2007 | WO 2007/066580 A1 paragraphs [0079]-[0093] | |
| JP | 2018-32984 | A | 01 March 2018 | US 2019/0179140 A1 paragraphs [0282]-[0292], fig. 10 | |
| JP | 2005-5799 | A | 06 January 2005 | (Family: none) | |

Form PCT/ISA/210 (patent family annex) (January 2015)

22